# EUROPEAN PATENT SPECIFICATION

(11) **EP 4 026 687 B1**
(45) Date of publication and mention of the grant of the patent: **08.01.2025**
(21) Application number: 20861313.3
(22) Date of filing: 01.09.2020
(51) Int. Cl.: B29L 30/00, B29C 33/02, B29C 35/02, B29D 30/06

(54) **TIRE FORMING MOLD**
REIFENFORMWERKZEUG
MOULE DE FORMATION DE PNEUMATIQUE

(30) Priority: 02.09.2019 JP 2019159362
(43) Date of publication of application: 13.07.2022
(73) Proprietor: BRIDGESTONE CORPORATION, Chuo-ku Tokyo 104-8340 (JP)
(72) Inventor: NIHONGI, Satoshi, Tokyo 104-8340 (JP)
(74) Representative: Marks & Clerk LLP
(86) International application number: PCT/JP2020/033028
(87) International publication number: WO 2021/045038

(56) References cited:
- JP-A- 2002 337 146
- JP-A- 2006 312 251
- JP-A- 2006 312 251
- JP-A- 2008 179 046
- JP-A- 2008 179 046

## Description

### BACKGROUND OF THE INVENTION

### Field of the Invention

The present invention relates to a mold for tire molding in which a plurality of segments are moved in a tire radial direction by an outer ring.

### Related Background of the Invention

The mold for tire molding is provided in a tire vulcanization apparatus and the tire is molded during vulcanization of the tire. In a conventional mold for tire molding, an outer ring surrounds a plurality of segments, and the plurality of segments are moved in interlocked with a movement of the outer ring. Further, the plurality of segments are arranged along a tire peripheral direction and opened and closed accompanied by the movement in the tire radial direction. The plurality of segments are closed and a tire tread part is molded by the plurality of segments while molding the tire (while vulcanizing). After molding the tire (after vulcanizing), the plurality of segments are opened to separate the segments from the tread part of the tire.

In the conventional mold for tire molding, whole of the segments are separated toward outside in the tire radial direction at the same time, when opening the plurality of segments. Therefore, a force required to move the segments becomes greater, and a force acting on the tread part of the tier becomes greater as well. Further, it is also necessary to provide a moving mechanism outside the mold for tire molding, depending on magnitude of the force required to move the segments. As to deal with this, it has been conventionally known a tire vulcanization apparatus in which the mold is opened and closed using a detachable unit of mold, a plurality of hydraulic cylinders, and an elevating cylinder (see Patent Document 1).

However, in the conventional tire vulcanization apparatus described in Patent Document 1, a mechanism for moving the segments is complicated, and it takes time and effort to open and close the segments. Further, when molding a very large tire (for example, a tire for a construction vehicle), the tire vulcanization apparatus including the mold would become large. Therefore, an installing place for the tire vulcanization apparatus would also become large, which would also result in rise in costs of the mold and the tire vulcanization apparatus.

Patent document 2 discloses similar features to those of the preamble of independent claim 1.

### Prior Art

### Patent Literature

Patent Document 1: Japanese Patent Laid-Open No. 2000-326332
Patent document 2: JP 2008 179046 A.

### SUMMARY OF THE INVENTION

### Problems to be Solved by Invention

The present invention has been made considering the conventional problem, and its object is to easily open and close the plurality of segments which mold the tire tread part using a mold for tire molding which is simple in structure.

### Means for solving Problems

The present invention is a mold for tire molding according to independent claim 1.

### EFFECTS OF THE INVENTION

According to the present invention, the plurality of segments for molding the tire tread part can be easily opened and closed by the mold for tire molding which is simple in structure.

### BRIEF DESCRIPTION OF THE DRAWINGS

FIG.1 is a sectional view showing a mold for tire molding of the present embodiment.
FIG.2 is a sectional view showing the mold for tire molding of the present embodiment.
FIG.3 is a sectional view showing the mold for tire molding of the present embodiment.
FIG.4 is a cross-sectional exploded view of the mold for tire molding 1 of the present embodiment.
FIG.5 is a back side view of the mold for tire molding viewed from an arrow x direction of FIG. 4.
FIG.6 is a sectional view showing closing movement of the mold for tire molding of the present embodiment.
FIG.7 is a sectional view showing the closing movement of the mold for tire molding of the present embodiment.
FIG.8 is a sectional view showing opening movement of the mold for tire molding of the present embodiment.
FIG.9 is a sectional view showing the opening movement of the mold for tire molding of the present embodiment.
FIG.10 is a sectional view showing an energizing mechanism of the mold for tire molding of the present embodiment.
FIG.11 is a sectional view showing the energizing mechanism of the mold for tire molding of the present embodiment.

### DESCRIPTION OF THE PREFERRED EMBODIMENTS

An embodiment of a mold for tire molding of the present invention will be described with reference to drawings.

The mold for tire molding of the present embodiment is a mold to be used for molding tires, and molds various tires (for example, a very large tire, a tire for construction vehicles). Further, the mold for tire molding is provided in a tire vulcanization apparatus and molds the outer surface of the tire during vulcanization of the tire. A tire vulcanization apparatus manufactures vulcanized tires (product tires) by vulcanizing un-vulcanized tires (raw tires) while molding them.

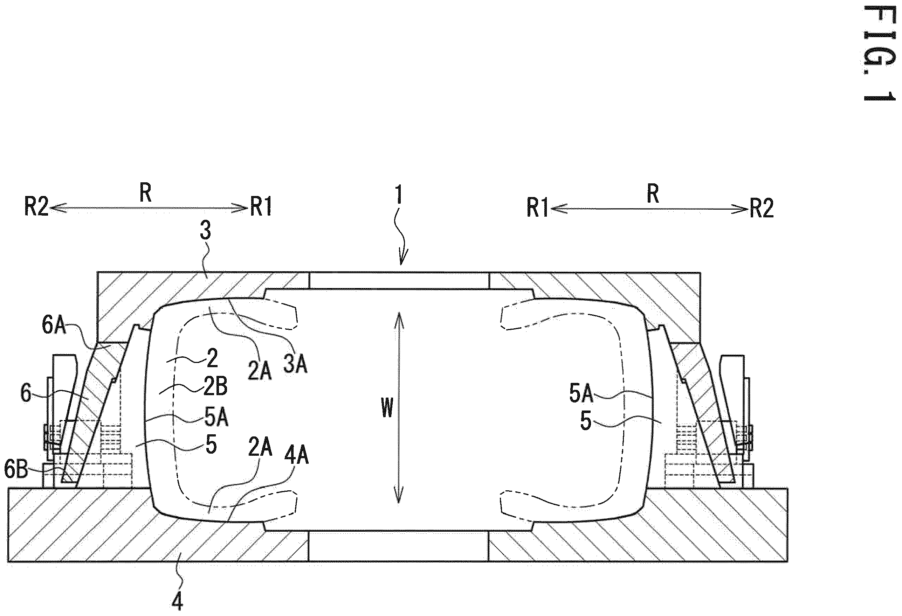

FIG.1 is a sectional view showing the mold for tire molding 1 of the present embodiment and shows the mold for tire molding 1 cut along a surface including a tire width direction of the tire 2 (a tire width direction W) and a radial direction of the tire 2 (a tire radial direction R). Furthermore, FIG. 1 schematically shows a cross section of the tire 2 to be molded by the mold for tire molding 1.

As shown in figure, the tire 2 is a pneumatic tire, and has a pair of side parts 2A located on both sides in the tire width direction W and a tread part 2B to be in contact with a road surface. The mold for tire molding 1 is an outer mold that accommodates the tire 2 and is arranged annularly along the peripheral direction of the tire 2 (tire peripheral direction). The tire 2 (un-vulcanized tire) is pressed by bladders (not shown) in the tire 2 and pressed against the mold for tire molding 1 during vulcanization of the tire 2. Further, the side parts 2A and the tread part 2B of the tire 2 are molded by the mold for tire molding 1.

It should be noted that directions relevant to the mold for tire molding 1 are specified by directions relevant to the tire 2 to be molded by the mold for tire molding 1. Directions relevant to the tire 2 are the tire peripheral direction, the tire radial direction R, and the tire width direction W. Based on each direction of the tire 2, the mold for tire molding 1 will be described. The tire peripheral direction agrees with the peripheral direction of the mold for tire molding 1(mold peripheral direction), and the tire radial direction R agrees with a radial direction of the mold for tire molding 1 (mold radial direction). The tire width direction W agrees with a direction of a rotating shaft of the tire 2 and the width direction of the mold for tire molding 1 (mold width direction). Here, the tire width direction W is the vertical direction, and the tire radial direction R is the horizontal direction. The inside R1 in the tire radial direction is a side closer to the center side (rotating shaft side) of the tire 2 in the tire radial direction R, and the outside R 2 in the tire radial direction R is a side farther from the center of the tire 2 in the tire radial direction R**.**

The mold for tire molding 1 comprises two annular side molds 3, 4 (a first side mold 3, a second side mold 4), a plurality of segments 5 that can be moved in the tire radial direction R, and an outer ring 6 that opens and closes the plurality of segments 5. The two side molds 3 and 4 are provided opposite each other in the tire width direction W and are arranged on both sides in the tire width direction W of the tire 2. The first side mold 3 is an upper side mold arranged on the upper side of the tire 2 and segments 5, and the second side mold 4 is a lower side mold arranged on the lower side of the tire 2 and segments 5. The side molds 3 and 4 each have a molding part (side molding part) 3A, 4A that is to be contact with the side parts 2A of the tire 2, the side parts 2A of the tire 2 are molded by the molding parts 3A, 4A.

The tire 2, the segments 5, and the outer rings 6 are placed between the two side molds 3 and 4. The plurality of segments 5 are split molds (segment molds) and are divided in the tire peripheral direction. Further, the plurality of segments 5 are tread molds, enclose the tread part 2B of the tire 2, and are arranged annularly along the tire peripheral direction. The segments 5 each have a molding part (tread molding part) 5A that is to be brought into contact with the tread part 2B of the tire 2, and the tread part 2B of the tire 2 is molded by the molding parts 5A. It should be noted that FIG. 1 shows the mold for tire molding 1 cut at dividing positions of segments 5. Therefore, FIG. 1 shows not a cross-sectional view of segments 5 but a side view of the segments 5.

The outer ring 6 is an annularly formed outer member and is fixed to the first side mold 3. The outer ring 6 protrudes from the first side mold 3 toward the second side mold 4 in the tire width direction W. A base end 6A of the outer ring 6 is fixed to the first side mold 3, and a distal end 6B of the outer ring 6 is opposed to the second side mold 4. The outer ring 6 is formed in a shape expanding outward toward the out side R2 in the tire radial direction R from the base end 6A toward the distal end 6B, and diameters (inner diameter, outer diameter) of the outer ring 6 increase from the base end 6A toward the distal end 6B. In the segments 5 and outer ring 6, the inside R1 in the tire radial direction R is a side closer to the tire 2, and the outside R2 in the tire radial direction R is a side farther from the tire 2.

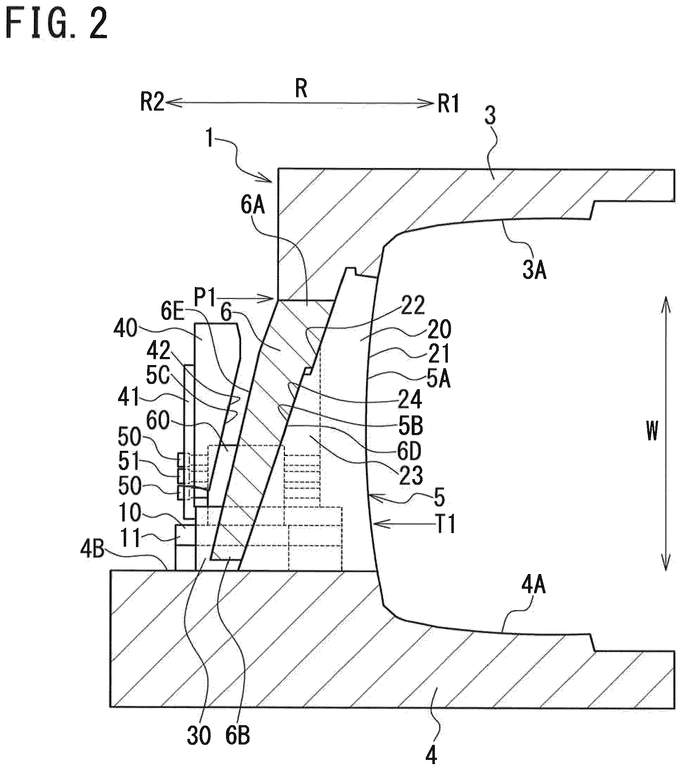

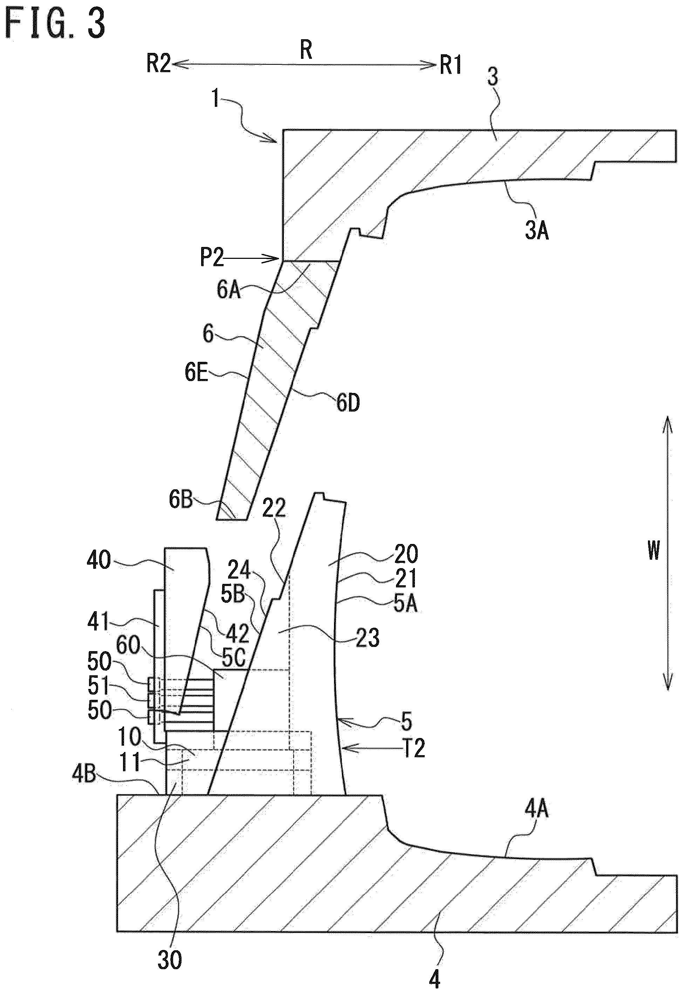

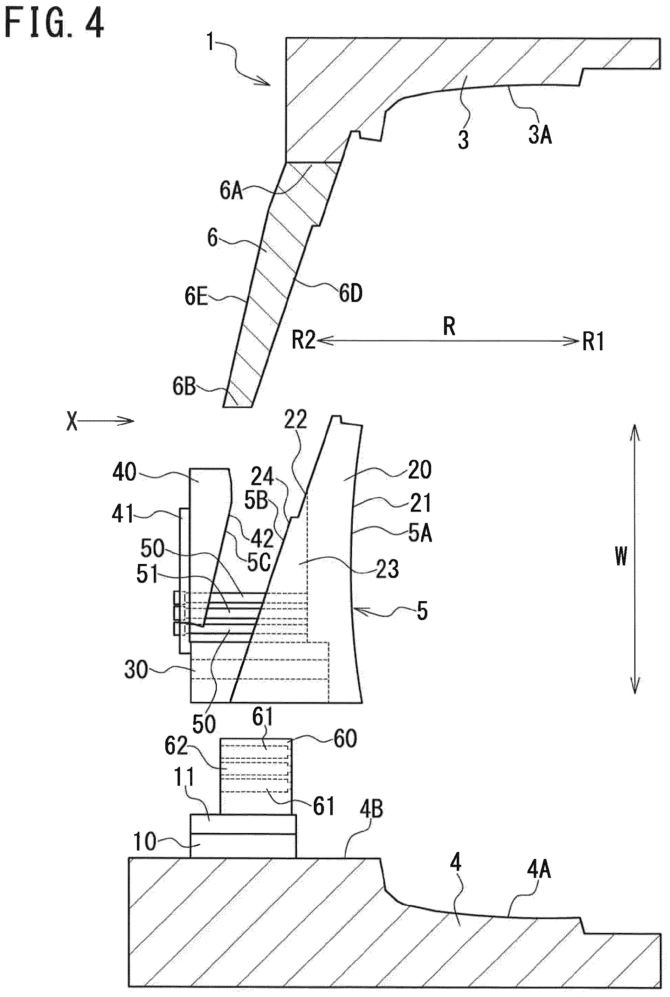

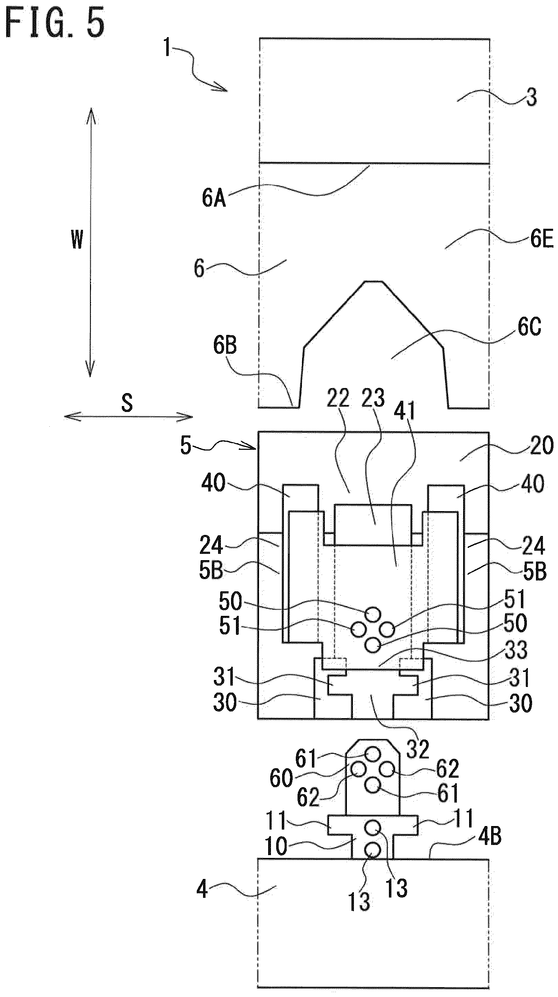

FIGS. 2 and 3 are cross-sectional views showing the mold for tire molding 1 of the present embodiment and show a part of one segment 5 of two segments 5 shown in FIG. 1. Further, FIG. 2 shows the mold for tire molding 1 in a closed state, and FIG. 3 shows the mold for tire molding 1 in an opened state. FIG. 4 is a cross-sectional exploded view of the mold for tire molding 1 of the present embodiment, and FIG. 5 is a back side view of the mold for tire molding 1 viewed from a direction of arrow X of FIG.4. A direction of an arrow S shown in FIG. 5 is a tire peripheral direction S.

As shown in figures, the first side mold 3 is moved in the tire width direction W by a moving device (e.g., a crane device) (not shown), and the mold for tire molding 1 is opened and closed. At that time, the outer ring 6 is moved in the tire width direction W integrally with the first side mold 3.

The first side mold 3 and the outer ring 6 are moved to one side (here, the lower side) in the tire width direction W to approach the second side mold 4, so that the mold for tire molding 1 is arranged in a closed position P1 (see FIG. 2). Further, the first side mold 3 and the outer ring 6 are moved to the other side (here, the upper side) in the tire width direction W, to separate from the second side mold 4, so that the mold for tire molding 1 is arranged in the opened position P2 (see FIG. 3). When the outer ring 6 is moved between the closed position P1 and the opened position P2, it comes into contact with the plurality of segments 5 and applies a moving force to the plurality of segments 5. The segments 5 are slidably mounted on a mounting part 4B (here, the upper surface) of the second side mold 4 and moved slidably on the mounting part 4B of the second side mold 4 by the force received from the outer ring 6. The mounting part 4B of the second side mold 4 is formed along the tire radial direction R, and segments 5 are moved slidably to the tire radial direction R on the mounting part 4B**.**

The outer ring 6 is moved in the tire width direction W and moves the plurality of segments 5 in the tire radial direction R. The plurality of segments 5 are moved toward the inside R1 and the outside R2 in the tire radial direction R, so that they are opened and closed. The segments 5 are thereby moved to an inner position T1 on the inside R1 in the tire radial direction R (see FIG. 2) and an outer position T2 on the outside R2 in the tire radial direction R (see FIG. 3) and are arranged at the inner position T1 and an outer position T2. In segments 5, the inner position T1 in the tire radial direction R is a molding position where the tread part 2B of the tire 2 is to be molded, and the outer position T2 in the tire radial direction R is a separation position where it is separated from the tread part 2B of the tire 2 toward the outside R2 in the tire radial direction R.

At the time of molding of the tire 2 (when vulcanizing), the first side mold 3 and the outer ring 6 are arranged in the opened position P2 to open the mold for tire molding 1 (see FIG. 3). Further, the plurality of segments 5 are arranged to be opened at the outer position T2 in the tire radial direction R. In that state, an un-vulcanized tire 2 is placed on the molding part 4A of the second side mold 4, so that a side part 2A of the tire 2 comes into contact with the molding part 4A of the second side mold 4. Subsequently, the first side mold 3 and outer ring 6 are moved from the opened position P2 to the closed position P1 toward one side in the tire width direction W and arranged in the closed position P1 (see FIG. 2). At the same time, the plurality of segments 5 are pressed toward the inside R1 in the tire radial direction R by the outer ring 6. The segments 5 are thereby moved from the outer position T2 in the tire radial direction R to the inner position T1 in the tire radial direction R and arranged at the inner position T1.

With the movement of the first side mold 3 and outer ring 6 to the closed position P1, the first side mold 3, the second side mold 4, and the plurality of segments 5 of the inner position T1 would be combined. The plurality of segments 5 and the mold for tire molding 1 are thereby closed, and the tire 2 is accommodated in the mold for tire molding 1. In that state, the molding part 3A of the first side mold 3 is in contact with the side part 2A of the tire 2. Further, the plurality of segments 5 are annularly combined along the tire peripheral direction S to surround the tire 2. The molding part 5A of each segment 5 is in contact with the tread part 2B of the tire 2 and pressed against the tread part 2B by the outer ring 6. With the mold for tire molding 1 closed, the tire 2 is molded by the mold for tire molding 1 while vulcanizing the tire 2.

After molding the tire 2 (after vulcanizing), the first side mold 3 and outer ring 6 are moved from the closed position P1 to the opened position P2 toward the other side in the tire width direction W and arranged in the opened position P2 (see FIG. 3). At the same time, the plurality of segments 5 are pressed toward the outside R2 in the tire radial direction R by the outer ring 6. The segments 5 are thereby moved toward outside in the tire radial direction R from the inner position T1 to the outer position T2 in the tire radial direction R and arranged at the outer position T2. The plurality of segments 5 are arranged at intervals to be separated from each other in the tire peripheral direction S. By moving the first side mold 3 and the outer ring 6 to the opened position P2, the plurality of segments 5 and the mold for tire molding 1 are opened. The first side mold 3 is separated from the side part 2A of the tire 2 in the tire width direction W, and the plurality of segments 5 are separated from the tread part 2B of the tire 2 toward the outside R 2 in the tire radial direction R. In that state, the tire 2 (product tire) after molding is taken out from the mold for tire molding 1.

The mold for tire molding 1 includes guiding members 10 (see FIGS. 4 and 5) attached to the second side mold 4, and movement of segments 5 is guided by the guiding members 10. The guiding members 10 are provided at plural places of the mounting part 4B of the second side mold 4 corresponding to the plurality of segments 5, and the plurality of segments 5 are slidably connected to the guiding members 10. The guiding members 10 protrude from the mounting part 4B of the second side mold 4 and are arranged along the tire radial direction R in the mounting part 4B of the second side mold 4. Further, each guiding member 10 is a guide block (T block) formed in a T-shape in cross section perpendicular to the tire radial direction R and has overhanging parts 11 formed at positions separated from the mounting part 4B of the second side mold 4. The overhanging parts 11 of the guiding member 10 protrude to both sides relative to a part of the guiding member 10 on the base end side (mounting part 4B side) in the tire peripheral direction S.

Each segment 5 has a molding member 20 for molding the tread part 2B of the tire 2, connecting members 30 slidably connected to the guiding member 10, contacting members 40 to be in contact with the outer ring 6, a holding member 41 holding the contacting members 40, and a plurality of guide rods 50, 51 (two first guide rods 50, two second guide rods 51). The molding member 20 of the segment 5, the connecting members 30, the contacting members 40, the holding member 41 and the guide rods 50 and 51 would be moved integrally in the tire radial direction R.

The molding member 20 is a main body portion (molding portion) of segment 5, and has an inner peripheral part 21 located on the inside R1 (inner peripheral side) in the tire radial direction R and a back part 22 located on the outside R2 (outer peripheral side) in the tire radial direction R. The inner peripheral part 21 of the molding member 20 is the molding part 5A of segment 5 that molds the tread part 2B of the tire 2. The back part 22 of the molding member 20 has a recessed part 23 formed in its central part in the tire peripheral direction S and inclined parts24 formed on both sides in the tire peripheral direction S of the recessed part 23. The two inclined parts 24 of the molding member 20 are first contacting parts 5B of the segment 5 in contact with the outer ring 6, and are inclined relative to the tire width direction W.

On the back part 22 side of the molding member 20 (see FIG. 5), the two connecting members 30 are arranged opposed each other in the tire peripheral direction S and attached to the molding member 20. The two connecting members 30 have grooves 31 in parts opposed each other which form a connecting slot 32 including two grooves 31 and an open slot 33 opening into the connecting slot 32 therebetween. The connecting members 30, the connecting slot 32 and the open slot 33 extend in the tire radial direction R from a position at the recessed part 23 of the molding member 20 to a position on the outside R2 in the tire radial direction R of the inclined parts 24 (first contacting parts 5B). The connecting slot 32 is a T-shaped slot in cross section perpendicular to the tire radial direction R and opens at the mounting part 4B side (lower side) of the second side mold 4 and opens at the opposite side (upper side) of the mounting part 4B through the open slot 33.

The guiding member 10 is inserted into the connecting slot 32 from an opening at an end of the connecting slot 32 and connected wth the connecting slot 32 and the connecting members 30. In that state, the two overhanging parts 11 of the guiding member 10 are arranged in the grooves 31 of the connecting slot 32 (connecting members 30), respectively, and are slidably engaged with the grooves 31. Further, the molding members 20 and the connecting members 30 are slidably mounted on the mounting part 4B of the second side mold 4. By sliding the connecting members 30 along the guiding member 10 in the tire radial direction R, the connecting members 30 and the segment 5 are guided in the tire radial direction R by the guiding member 10. The segment 5 is guided by the guiding member 10 and moved toward the inside R1 and the outside R2 in the tire radial direction R.

The segment 5 (molding member 20) is moved toward the inside R1 in the tire radial direction R in a same posture (posture for molding) as a posture when molding the tread part 2B of the tire 2 and brought into contact with the tread part 2B of the tire 2 in the posture for molding. Between the guiding member 10 in the connecting slot 32 and the connecting members 30 of the segment 5, there is provided a space (play) allowing inclination of the segment 5 from the posture for molding toward the outside R2 in the tire radial direction R. Therefore, the guiding member 10 is connected with the segment 5 (connecting members 30) with the play allowing inclination of the segment 5 in the posture for molding toward the outside R2 in the tire radial direction R and guides the segment 5 which is moved in the tire radial direction R.

The segment 5 is separated from the tread part 2B of the tire 2 while being inclined from the posture for molding toward the outside R2 in the tire radial direction R and moved toward the outside R2 in the tire radial direction R. The inclined posture of segment 5 is a posture of segment 5 when inclined from the posture for molding toward the outside R2 in the tire radial direction R. The segment 5 in the inclined posture is arranged such that it is inclined relative to the tire width direction W. Segment 5 is inclined from the posture for molding such that a part (here, the lower part) on one side (guiding member 10 side) in the tire width direction W is displaced toward the outside R2 in the tire radial direction R relative to a part (here, the upper part) on the other side in the tire width direction W.

Two contacting members 40 (see FIG. 5) are fixed to the holding member 41, and the holding member 41 is attached to the connecting members 30. The connecting members 30 are located between the back part 22 of the molding member 20 and the holding member 41, and the holding member 41 and the contacting members 40 protrude from ends of the connecting members 30 on the outside R2 in the tire radial direction R in the tire width direction W. The contacting members 40 and the holding member 41 are arranged at positions separated from the back part 22 of the molding member 20 toward the outside R2 in the tire radial direction R, and the two contacting members 40 are arranged spaced apart in the tire peripheral direction S. The contacting members 40 each has an inclined part 42 located on inside R1 (see FIG. 4) in the tire radial direction R. The inclined part 42 of the contacting member 40 is the second contacting part 5C of the segment 5 in contact with the outer ring 6 and is inclined relative to the tire width direction W corresponding to an inclined part 24 (first contacting part 5B) of the molding member 20.

A plurality of guide rods 50 and 51 are fixed to the molding member 20 and the holding member 41 and extend along the tire radial direction R between the back part 22 and the holding member 41 of the molding member 20. The two first guide rods 50 are located in the central part of the segment 5 in the tire peripheral direction S (see FIG. 5) and are arranged side by side in the tire width direction W. The two second guide rods 51 are located on both sides of the central part of the segment 5 in the tire peripheral direction S and are arranged side by side in the tire peripheral direction S. The guide rods 50 and 51 penetrate through holes 61 and 62 in a support member 60, respectively, and are slidably supported by the support member 60. The through holes 61 and 62 pass through the support members 60 in the tire radial direction R. The support member 60 is attached to the guiding member 10 and protrudes from the open slot 33 in the tire width direction W through the open slot 33 between the two connecting members 30. The segment 5 is guided by guide rods 50, 51 and is moved in the tire radial direction R. At that time, a position of the support member 60 changes in the open slot 33.

The segment 5 has two first contacting parts 5B formed at the molding member 20 and two second contacting parts 5C formed at the contacting members 40 (see FIG**.** 4). The first contacting parts 5B and the second contacting parts 5C are provided at different positions in the segment 5 and slidably contact with the outer ring 6, respectively. The first contacting parts 5B come to contact with the outer ring 6 which is moved toward one side (lower side) in the tire width direction W, and the second contacting parts 5C come to contact with the outer ring 6 which is moved toward the other side (upper side) in the tire width direction W. The second contacting parts 5C are located on the outside R2 in the tire radial direction R of the first contacting parts 5B, the first contacting parts 5B and the second contacting parts 5C are opposed each other in the tire radial direction R. The first contacting parts 5B and the second contacting parts 5C of the segment 5 are separately arranged in the tire radial direction R leaving a space (arrangement space) in which outer ring 6 can be arranged therebetween.

The outer ring 6 has a concave-shaped blank 6C formed from the distal end 6B toward the base end 6A (see FIG. 5), the first sliding part 6D (see FIG. 4) on which the first contacting parts 5B of the segment 5 are to slide, and the second sliding part 6E on which the second contacting parts 5C of the segment 5 are to slide. When the outer ring 6 is arranged in the closed position P1, the support member 60, guide rods 50, 51, the connecting members 30, and the guiding member 10 are arranged within the blank 6C of the outer ring 6. The first sliding part 6D and the second sliding part 6E are provided at different positions in the outer ring 6 and are inclined relative to the tire width direction W, respectively. The first sliding part 6D is an inner peripheral part located on the inside R1 in the tire radial direction R of the outer ring 6, and the second sliding part 6E is an outer peripheral part located on the outside R2 in the tire radial direction R of the outer ring 6.

The outer ring 6 is moved from the opened position P2 (see FIG. 3) toward one side (lower side) in the tire width direction W and arranged between the first contacting parts 5B and the second contacting parts 5C of segment 5 (see FIG. 2). In that state, the outer ring 6 and the first sliding part 6D are arranged on the outside R2 in the tire radial direction R relative to the molding member 20 and the first contacting parts 5B of segment 5. The molding member 20 is arranged inside the outer ring 6, and the outer ring 6 surrounds the molding members 20 of the plurality of segments 5. The first sliding part 6D of the outer ring 6 is opposed to the first contacting parts 5B of the segment 5 in the tire radial direction R. Further, the outer ring 6 and the second sliding part 6E are arranged on the inside R1 in the tire radial direction R relative to the contacting members 40 and the second contacting parts 5C of segment 5. The second sliding part 6E of the outer ring 6 is opposed to the second contacting parts 5C of segment 5 in the tire radial direction R.

The outer ring 6 is moved to one side (lower side) in the tire width direction W so as to be brought into contact with the first contacting parts 5B of the segment 5 at the first sliding part 6D and is moved to the other side (upper side) in the tire width direction W so as to be brought into contact with the second contacting parts 5C of the segment 5 at the second sliding part 6E. Further, the outer ring 6 is moved in the tire width direction W between the first contacting parts 5B and the second contacting parts 5C of the segment 5, and thus moves the plurality of segments 5 in the tire radial direction R. The outer ring 6 is moved from the closed position P1 toward the other side in the tire width direction W and exits from an area between the first contacting parts 5B and the second contacting parts 5C of the segment 5.

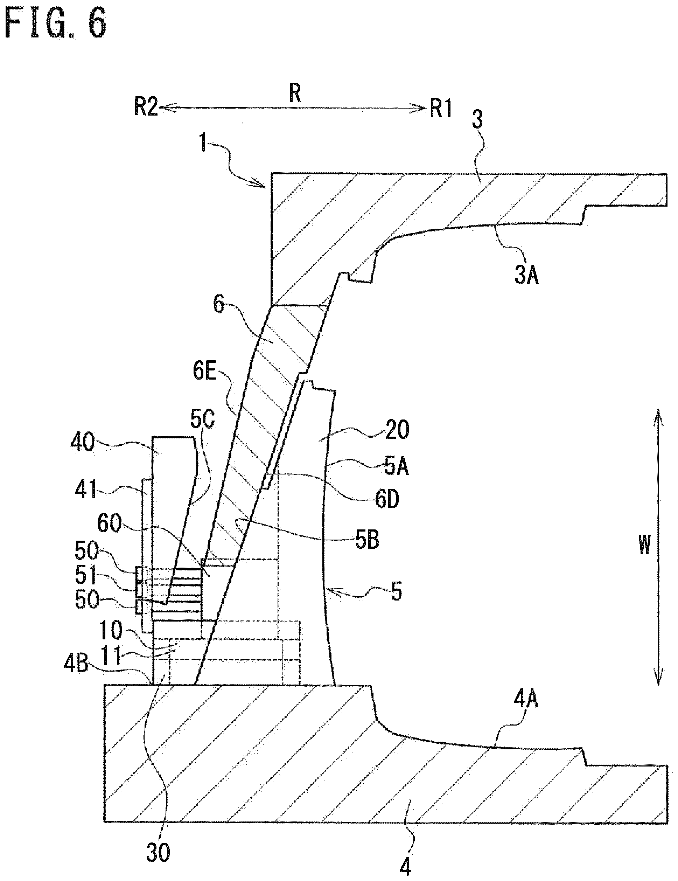

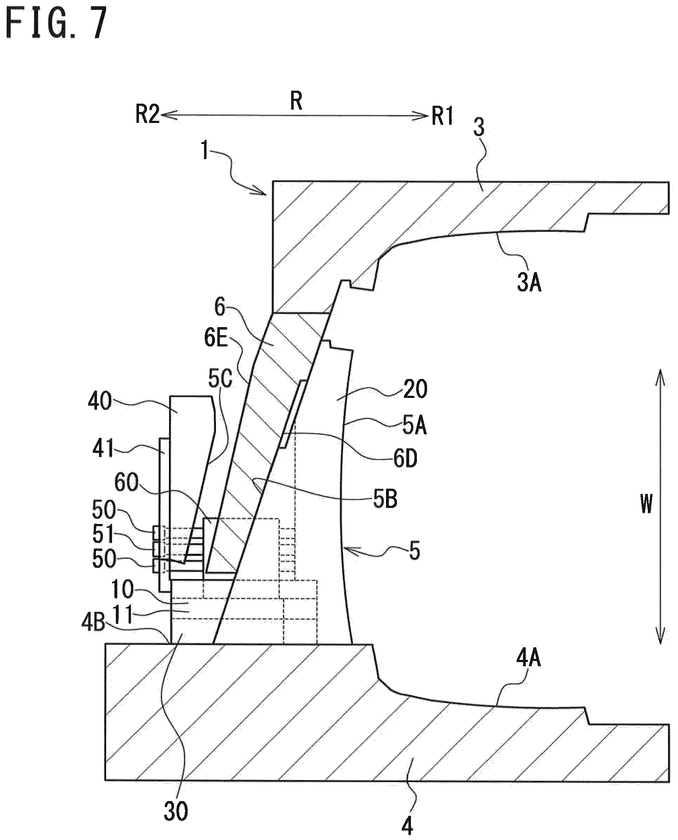

FIGS. 6 and 7 are cross-sectional views showing a closing operation of the mold for tire molding 1 of the present embodiment.

As shown in figures, when the mold for tire molding 1 is closed, the first side mold 3 and the outer ring 6 are moved from the opened position P2 (see FIG. 3) toward one side (lower side) in the tire width direction W to the closed position P1 (see FIG. 2) and arranged in the closed position P1. Further, the plurality of segments 5 are moved toward the inside R1 in the tire radial direction R from the outer position T2 to the inner position T1 in the tire radial direction R by the outer ring 6 and arranged in the inner position T1.

When the outer ring 6 is moved to one side in the tire width direction W, the first contacting parts 5B of segment 5 contact slidably with the first sliding part 6D of the outer ring 6 (see FIG. 6), so that the sliding part 6D slides thereon (see FIG. 7). The first sliding part 6D of the outer ring 6 applies a force toward the inside R1 to the first contacting parts 5B of the segment 5 to press the first contacting parts 5B and the segment 5 toward the inside R1 in the tire radial direction R. Accordingly, the plurality of segments 5 are moved toward the inside R1 in the tire radial direction R and closed (see FIG. 2). The Segments 5 are pressed by the first sliding part 6D of the outer ring 6 and held with left being in contact with the tread part 2B of the tire 2.

The first sliding part 6D of the outer ring 6 is a cam portion, and the first contacting parts 5B of segment 5 are cam follower portions. Due to a cam structure consisting of the first sliding part 6D and the first contacting parts 5B, a movement toward one side in the tire width direction W of the outer ring 6 is converted into a movement toward the inside R1 in the tire radial direction R of segment 5. With the first contacting parts 5B of segment 5 being in contact with the first sliding part 6D of the outer ring 6, the second contacting parts 5C of segment 5 are arranged separated from the second sliding part 6E of the outer ring 6 in the tire radial direction R. Each of the second contacting parts 5C and the second sliding part 6E do not contact with each other and opposed each other with a space therebetween. The second sliding part 6E is arranged at a position separated from the second contacting parts 5C toward the inside R1 in the tire radial direction R.

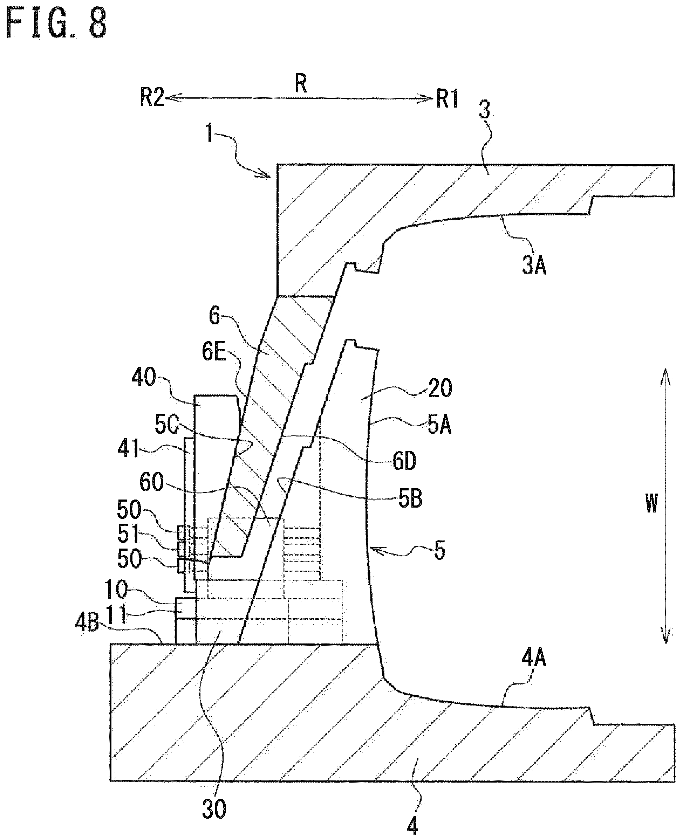

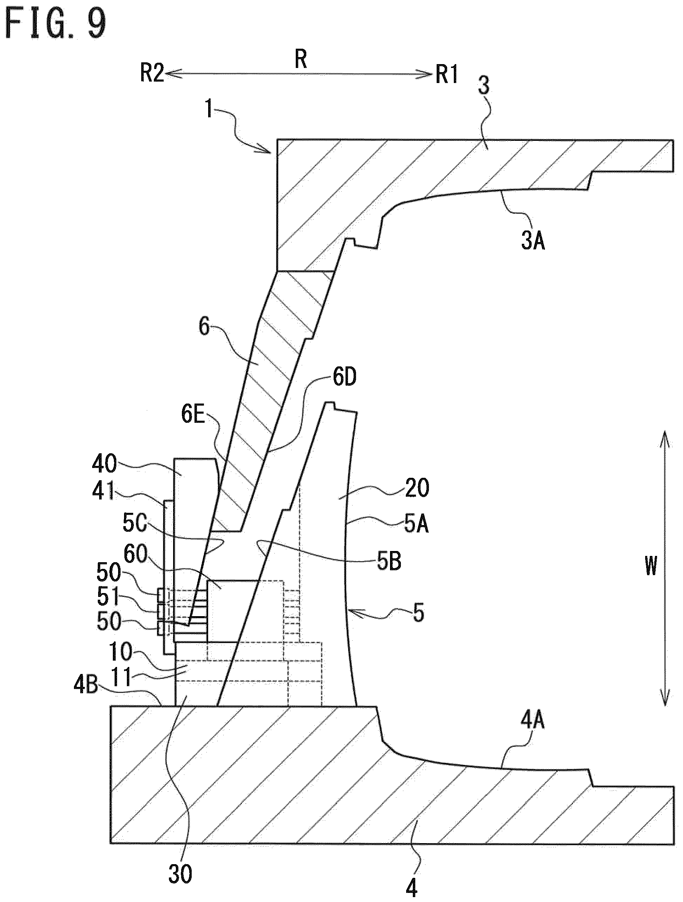

FIGS. 8 and 9 are cross-sectional views showing the opening operation of the mold for tire molding 1 of the present embodiment.

As shown in figures, when the mold for tire molding 1 is opened, the first side mold 3 and outer ring 6 are moved from the closed position P1 (see FIG. 2) toward the other side in the tire width direction W (upper side) to the opened position P2 (see FIG. 3) and to be arranged at the opened position P2. Further, by the outer ring 6, the plurality of segments 5 are moved from the inner position T1 in the tire radial direction R to the outer position T2 in the tire radial direction R and to be arranged at the outer position T2.

When the outer ring 6 is moved toward the other side in the tire width direction W, the second contacting parts 5C of segment 5 come to contact slidably with the second sliding part 6E of the outer ring 6 (see FIG. 8) such that the second sliding part 6E slide thereon (see FIG. 9). The second sliding part 6E of the outer ring 6 applies a force toward the outside R2 in the tire radial direction R (a force in the open direction) to the second contacting parts 5C of the segment 5, and to press the second contacting parts 5C and the segment 5 toward the outside R2 in the tire radial direction R. thus, the plurality of segments 5 are moved toward the outside R2 of the tire radial direction R and opened (see FIG. 3).

The second sliding part 6E of the outer ring 6 is a cam portion, and the second contacting parts 5C of segment 5 are cam follower portions. Due to a cam structure consisting of the second sliding part 6E and the second contacting parts 5C, a movement of the outer ring 6 toward the other side in the tire width direction W is converted into a movement of the segment 5 toward the outside R2 in the tire radial direction R. In a state that the second contacting parts 5C of segment 5 is in contact with the second sliding part 6E of the outer ring 6, the first contacting parts 5B of segment 5 are arranged to be separated from the first sliding part 6D of the outer ring 6 in the tire radial direction R. Each of the first contacting parts 5B and the first sliding part 6D do not contact with each other and are opposed with a space therebetween. The first sliding part 6D is arranged at a position separated from the first contacting parts 5B toward the outside R2 in the tire radial direction R.

After the first sliding part 6D of the outer ring 6 is separated from the first contacting parts 5B of segment 5 (see FIG. 2), the outer ring 6 and the first side mold 3 are moved toward the other side in the tire width direction W, so that the second sliding part 6E of the outer ring 6 is brought into contact with the second contacting parts 5C of the segment 5 (see FIG. 8). The outer ring 6 is moved between the first contacting parts 5B and the second contacting parts 5C in the tire width direction W without contacting with the segment 5. Therefore, when opening the mold for tire molding 1, after the first side mold 3 starts to be moved, the second sliding part 6E is brought into contact with the second contacting parts 5C, whereby the segments 5 start to be moved. Further, after the first side mold 3 is separated from the side part 2A of the tire 2, the segments 5 are separated from the tread part 2B of the tire 2. The segments 5 are pushed and moved in the tire radial direction R by the outer ring 6 while being energized by the energizing mechanisms 7.

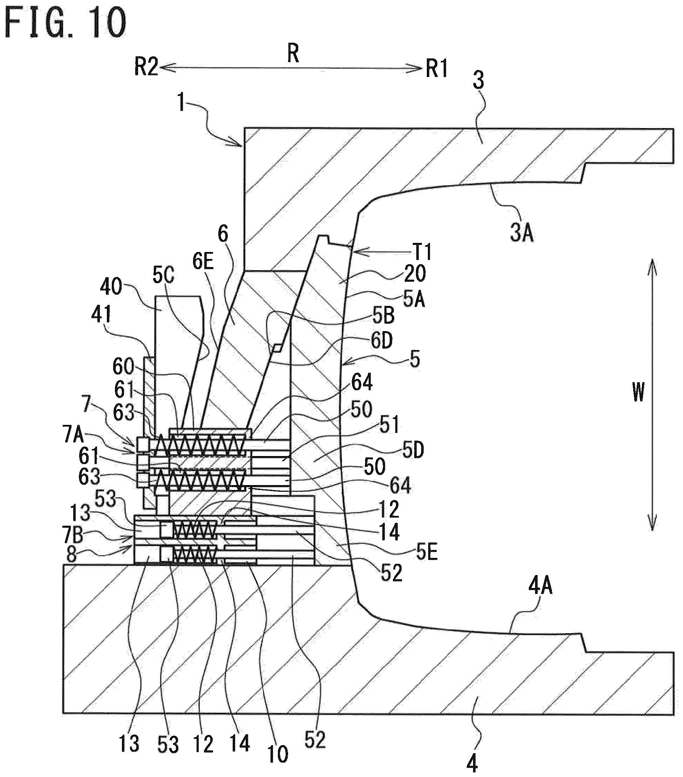

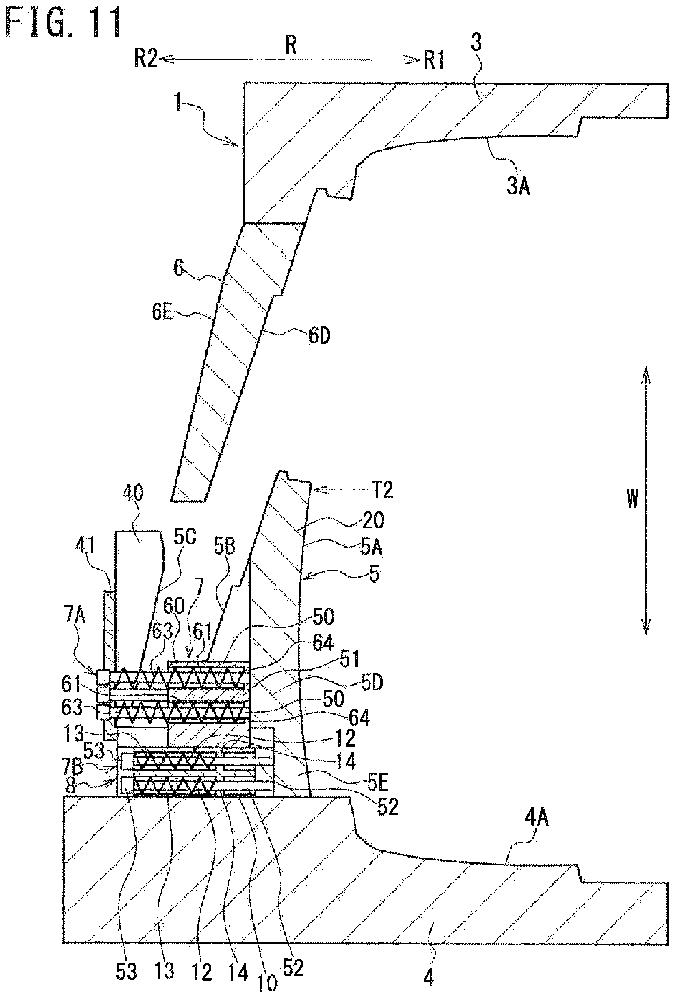

FIGS. 10 and 11 are cross-sectional views showing the energizing mechanism 7 of the mold for tire molding 1 of the present embodiment, and the mold for tire molding 1 corresponding to FIGS. 2 and 3. Further, FIGS. 10 and 11 show the cross section of segment 5, guiding members 10, and support member 60 cut at the position of the energizing mechanism 7.

As shown in figures, the mold for tire molding 1 comprises the energizing mechanisms 7 energizing the plurality of segments 5 toward the outside R2 in the tire radial direction R. When the segments 5 are moved from the inner position T1 toward the outer position T2 in the tire radial direction R, the segments 5 are energized toward the outside R2 in the tire radial direction R by the energizing mechanisms 7. Here, the energizing mechanisms 7 always energize the segments 5 toward the outside R2 in the tire radial direction R. Therefore, the segments 5 are moved toward the inside R1 in the tire radial direction R, while being energized toward the outside R 2 in the tire radial direction R by the energizing mechanisms 7.

An energizing mechanism 7 has two energizing portions 7A and 7B (first energizing portion 7A and second energizing portion 7B). The first energizing portion 7A is provided between the segment 5 and the support the member 60, and the second energizing portion 7B is provided between the segment 5 and the guiding member 10. The first energizing portion 7A of the energizing mechanism 7 is connected to an intermediate part 5D of the segment 5 (here, the molding member 20) located between both ends thereof in the tire width direction W, and energizes the intermediate part 5D of the segment 5 toward the outside R2 in the tire radial direction R. The second energizing portion 7B of the energizing mechanism 7 is connected to an end 5E of the segment 5 located on either side in the tire width direction W (here, the lower end of the molding member 20), and energizes the end 5E of the segment 5 toward the outside R2 in the tire radial direction R.

The first energizing portion 7A of the energizing mechanism 7 is composed of the support member 60, the first guide rods 50 and energizing members 63. The energizing member 63 is a spring (here, a compression coil spring) and is arranged in the through hole 61 of the support member 60 and protrudes from the through hole 61 toward the outside R2 in the tire radial direction R. The support member 60 has a stepped part 64 formed inside each through hole 61. A diameter of the through hole 61 at the stepped part 64 is smaller than a diameter of the through hole 61 at any part other than the stepped part 64. The stepped part 64 is formed at an end of the inside R1 in the tire radial R of the through hole 61 and protruding toward the inside the through hole 61.

The energizing member 63 is arranged around the first guide rod 50 between the stepped part 64 of the through hole 61 and the holding member 41. An end of the inside R1 in the tire radial direction R of the energizing member 63 is in contact with the stepped part 64, and an end of the outside R2 of the tire radial direction R of the energizing member 63 is in contact with the holding member 41. Two first guide rods 50 are fixed to the intermediate part 5D of segment 5, and the energizing member 63 is arranged around each of the two first guide rods 50. The energizing mechanism 7 energizes the intermediate part of segment 5 toward the outside R2 in the tire radial direction R by the energizing members 63 of the first energizing portion 7A.

The second energizing portion 7B of the energizing mechanism 7 is composed of a guiding member 10, guide rods (third guide rods 52), and energizing members 12. Two third guide rods 52 are fixed to the end 5E of segment 5 (molding member 20). The two third guide rods 52 are located in the central part of the segment 5 in the tire peripheral direction S and are arranged side by side in the tire width direction W. The third guide rods 52 extend along the tire radial direction R and are moved in the tire radial direction R integrally with the segment 5. Further, the third guide rods 52 are arranged from the inside of the through holes 13 of the guiding member 10 to the end 5E of the segment 5 and are slidably supported by the guiding member 10. The through holes 13 penetrate the guiding member 10 in the tire radial direction R. The segment 5 is guided by the third guide rods 52 and is moved to the tire radial direction R.

The guiding member 10 has a stepped part 14 formed inside each through hole 13. A diameter of the through hole 13 at the stepped part 14 is smaller than a diameter of the through hole 13 at any part other than the stepped part 14, and the stepped part 14 protrudes toward the inside the through hole 13. The energizing member 12 is the spring (here, the compression coil spring) and is arranged in the through hole 13 of the guiding member 10. The energizing member 12 is arranged around the third guide rod 52 between the stepped part 14 of the through hole 13 and a large diameter part 53 of the third guide rod 52. A diameter of the large diameter part 53 is larger than a diameter of any part other than the large diameter part 53 of the third guide rod 52. An end of the energizing member 12 at the inside R1 in the tire radial direction R is in contact with the stepped part 14, and an end of the energizing member 12 at the outside R2 in the tire radial direction R of the energizing member 12 is in contact with the large diameter part 53 of the third guide rod 52. The energizing member 12 is arranged around each of the two third guide rods 52. The energizing mechanism 7 energizes the end 5E of the segment toward the outside R2 in the tire radial direction R by the energizing member 12 of the second energizing portion 7B.

When the mold for tire molding 1 is closed, the first sliding part 6D of the outer ring 6 pushes the first contacting parts 5B of the segment 5 which are energized by the energizing mechanism 7 (the first energizing portion 7A, the second energizing portion 7B) toward the inside R1 in the tire radial direction R (see FIG. 10). The segment 5 is guided by the guiding member 10 in the molding posture for molding the tread part 2B of the tire 2 and is moved toward the inside R1 in the tire radial direction R. Along with the movement of segment 5, the energizing member 63 of the first energizing portion 7A is pressed by the holding member 41 of segment 5 and compressed toward the inside R1 (stepped part 64 side) in the tire radial direction R. Further, the energizing member 12 of the second energizing portion 7B is pressed by the large diameter part 53 of the third guide rod 52 and compressed toward the inside R1 (stepped part 14 side) in the tire radial direction R. The segment 5 is moved while compressing the energizing members 63 and 12 and is placed at a position (inner position T1 in the tire radial direction R) where the tread part 2B of the tire 2 is to be molded.

When the mold for tire molding 1 is opened, the energizing mechanism 7 energizes the segment 5 (intermediate part 5D, end 5E) toward the outside R2 in the tire radial direction R and presses the segment 5 toward the outside R2 in the tire radial direction R by the first energizing portion 7A and the second energizing portion 7B. At that time, the energizing member 63 of the first energizing portion 7A pushes the holding member 41 of the segment 5 toward the outside R2 in the tire radial direction R while restoring from a compression shape to an extension shape, and energizes the intermediate part 5D of segment 5 toward the outside R2 in the tire radial direction R. The energizing member 12 of the second energizing portion 7B pushes the large diameter part 53 of the third guide rod 52 toward the outside R2 in the tire radial R, while restoring from the compression shape to the extension shape, and energizes the end 5E of the segment 5 toward the outside R2 in the tire radial direction R. Further, the second sliding part 6E of the outer ring 6 pushes the second contacting parts 5C of the segment 5, which are energized by the energizing mechanism 7 (first energizing portion 7A, the second energizing portion 7B) toward the outside R2 in the tire radial direction R. The segment 5 is moved toward the outside R2 in the tire radial direction R by a force received from the energizing mechanism 7 and the outer ring 6.

The guiding member 10 allows the segment 5 to incline from the posture for molding toward the outside R2 in the tire radial direction R. The mold for tire molding 1 is provided with an inclining means 8, and when the segment 5 is moved toward the outside R2 in the tire radial R, the segment 5 is inclined by the inclining means 8. Here, the inclining means 8 is the second energizing portion 7B of the energizing mechanism 7. By the energization of the second energizing portion 7B, a part at which the segment 5 is energized is biased toward the end 5E side of the segment 5, and the segment 5 is biasedly energized. The inclining means 8 displaces the end 5E of segment 5 toward the outside R2 in the tire radial direction R by the energization of the second energizing portion 7B to the end 5E of the segment 5, and inclines the segment 5 in the posture for molding toward the outside R2 in the tire radial direction R. The segment 5 is guided by the guiding member 10 in the inclined posture and is moved toward the outside R2 in the tire radial direction R.

During a period from when the first sliding part 6D is separated from the first contacting part 5B and to when it is broutht into contact with the second contacting part 5C of the second sliding part 6E, the segment 5 is inclined by the inclining means 8 (the second energizing portion 7B). Therefore, in advance of moving of the segment 5 by the outer ring 6 toward the outside R2 in the tire radial direction R, the posture of the segment 5 changes from the posture for molding to the inclined posture. When the segment 5 is separated from the tread part 2B of the tire 2 toward the outside R2 in the tire radial R, the inclining means 8 inclines the segment 5 from the molding posture for molding the tread part 2B of the tire 2 toward the outside R2 in the tire radial direction R.

In the mold for tire molding 1 described above, the outer ring 6 can smoothly move segments 5 toward the inside R1 in the tire radial direction R, and segments 5 can be reliably moved to the outside R2 in the tire radial direction R by the outer ring 6 and the energizing mechanisms 7. Further, the plurality of segments 5 can be easily opened and closed by the mold for tire molding 1 simple in structure. The tire 2 can be molded efficiently by the compact mold for tire molding 1.

The segments 5 are separated from the tread part 2B of the tire 2 while being inclined from the posture for molding. Therefore, the segments 5 can be gradually disengaged from the tread part 2B of the tire 2 from one side (lower side) in the tire width direction W toward the other side (upper side). Accordingly, the whole of segments 5 can be prevented from being disengaged from the tread part 2B of the tire 2 at the same time, and the force acting on the tread part 2B of the tire 2 from segments 5 can be reduced. Further, the force required to movie segments 5 can be reduced. Therefore, the segments 5 can be smoothly separated from the tread part 2B of the tire 2, and the segments 5 can be easily moved to the outside R2 in the tire radial direction R.

With the guide of the guiding members 10, the segments 5 can be smoothly moved in the tire radial direction R. Further, the guiding members 10 can easily incline the segments 5 from the posture for molding, and the segments 5 can be smoothly moved to the outside R2 in the tire radial direction R in the inclined posture. Each inclining means 8 has the second energizing portion 7B of the energizing mechanism 7, and segments 5 can be stably inclined by inclining means 8 of simple structure. The outer ring 6 is moved to the tire width direction W between the first contacting parts 5B and the second contacting parts 5C of the segment 5 to move segments 5. Therefore, it is possible to suppress the mold for tire molding 1 from becoming a complicated structure, and the segments 5 can be smoothly moved by the outer ring 6.

The second contacting parts 5C of each segment 5 are separated from the second sliding part 6E of the outer ring 6 while the first contacting parts 5B of the segment 5 are in contact with the first sliding part 6D of the outer ring 6. Therefore, when the segments 5 are moved to the inside R1 in the tire radial direction R, only the first contacting parts 5B of each segment 5 can be pressed by the first sliding part 6D of the outer ring 6, an accurate movement of the segments 5 can be thereby obtained. Further, the first contacting parts 5B of the segment 5 are separated from the first sliding part 6D of the outer ring 6, while the second contacting parts 5C of the segment 5 are in contact with the second sliding part 6E of the outer ring 6. Therefore, when the segments 5 are moved to the outside R2 in the tire radial direction R, only the second contacting parts 5C of each segment 5 are pressed by the second sliding part 6E of the outer ring 6, the accurate movement of the segments 5 can be obtained.

It should be noted that, the outer ring 6 and the first side mold 3 may be attached to a movable member without fixing the outer ring 6 to the first side mold 3. By moving the movable member to the tire width direction W, the outer ring 6 and the first side mold 3 are moved to the tire width direction W. Further, the second side mold 4 may be fixed to a base member and the segments 5 may be slidably mounted on a mounting part of the base member. The energizing members 12 and 63 of the energizing mechanism 7 may be any energizing member (e.g., an elastic body) other than the spring.

### Reference Signs List

1...mold for tire molding
2... tire
2A...side part
2B... tread part
3...first side mold
3A...molding part
4...second side mold
4A...molding part
4B...mounting part
5... segment
5A...molding part
5B...first contacting part
5C...second contacting part
5D... intermediate part
5E...end, 6...outer ring
6A...base end
6B...distal end
6C... space
6D...first sliding part
6E...second sliding part
7...energizing mechanism
7A...first energizing portion
7B...second energizing portion
8...inclining means
10...guiding member
11...overhanging part
12...energizing member
13...through hole
14...stepped part
20...molding member
21...inner peripheral part
22...back part
23...recessed part
24...inclining part
30...connecting member
31...groove
32...connecting slot
33...open slot
40...connecting member
41...holding member
42...inclined part
50...first guide rod
51...second guide rod
52...third guide rod
53...large diameter part
60...supporting member
61...through hole
62...through hole
63...energizing member
64...stepped part,
P1...closed position
P2...opened position
R...tire radial direction
R1...inside
R2...outside
S...tire peripheral direction
T1...inner position
T2...outer position
W...tire width direction

## Claims

1. A mold for tire molding comprising a plurality of segments for molding a tread part which are arranged along a tire peripheral direction, an outer ring which is moved in a tire width direction to move the plurality of segments in a tire radial direction, and an energizing mechanism having an energizing portion for energizing the plurality of segments toward outside in the tire radial direction;
wherein the segments each have a first contacting part which comes into contact with the outer ring moved to one side in the tire width direction and a second contacting part which comes into contact with the outer ring moved toward the other side in the tire width direction;
the outer ring has a first sliding part which is to slidably contact with the first contacting part of the segment when moved to one side in the tire width direction to push the first contacting part of the segment toward inside in the tire radial direction and a second sliding part which is to slidably contact with the second contacting part of the segment when moved to the other side in the tire width direction to push the second contacting part of the segment which is energized by the energizing mechanism toward outside in the tire radial direction,
**characterised in that**
the mold for tire molding further comprises a guiding member for guiding the segment which is moved in the tire radial direction, the guiding member being connected with the segment with a play allowing inclination of the segment in a posture for molding toward the outside in the tire radial direction, and wherein the segment is inclined from the posture for molding the tread part of the tire toward the outside in the tire radial direction by the energizing portion to energize an end of the segment and incline it outside in the tire radial direction when the segment is separated outwardly in the tire radial direction from the tread part of the tire.

2. The mold for tire molding according to claim 1,
wherein the first contacting part and the second contacting part are arranged to be separated in the tire radial direction leaving a space enabling to arrange the outer ring therebetween, and the outer ring is moved in the tire radial direction between the first contacting part and the second contacting part of the segment.

3. The mold for tire molding according to claim 1 or 2,
wherein the second contacting part is arranged to be separated from the second sliding part, in a state that the first contacting part of the segment is in contact with the first sliding part of the outer ring; and
the first contacting part is arranged to be separated from the first sliding part, in a state that the second contacting part of the segment is in contact with the second sliding part of the outer ring.

## Patentansprüche

1. Formwerkzeug zum Reifenformen, umfassend eine Vielzahl von Segmenten zum Formen eines Laufflächenteils, die entlang einer Reifenumfangsrichtung angeordnet sind, einen Außenring, der in einer Reifenbreitenrichtung bewegt wird, um die Vielzahl von Segmenten in einer Reifenradialrichtung zu bewegen, und einen Spannmechanismus mit einem Spannabschnitt zum Spannen der Vielzahl von Segmenten nach außen in der Reifenradialrichtung;
wobei die Segmente jeweils einen ersten Kontaktteil, der mit dem Außenring in Kontakt kommt, der zu einer Seite in der Reifenbreitenrichtung bewegt wird, und einen zweiten Kontaktteil aufweisen, der mit dem Außenring in Kontakt kommt, der zur anderen Seite in der Reifenbreitenrichtung bewegt wird;
der Außenring einen ersten Gleitteil, der dazu dient, mit dem ersten Kontaktteil des Segments in Gleitkontakt zu kommen, wenn er zu einer Seite in der Reifenbreitenrichtung bewegt wird, um den ersten Kontaktteil des Segments in der Reifenradialrichtung nach innen zu drücken, und einen zweiten Gleitteil aufweist, der dazu dient, mit dem zweiten Kontaktteil des Segments in Gleitkontakt zu kommen, wenn er in der Reifenbreitenrichtung zu der anderen Seite bewegt wird, um den zweiten Kontaktteil des Segments, der durch den Spannmechanismus gespannt wird, in der Reifenradialrichtung nach außen zu drücken,
**dadurch gekennzeichnet, dass**
das Formwerkzeug zum Reifenformen ferner ein Führungselement zum Führen des Segments umfasst, das in der Reifenradialrichtung bewegt wird, wobei das Führungselement mit dem Segment mit einem Spiel verbunden ist, das eine Neigung des Segments in einer Formungsstellung nach außen in der Reifenradialrichtung ermöglicht, und wobei das Segment aus der Formungsstellung des Laufflächenteils des Reifens nach außen in der Reifenradialrichtung durch den Spannabschnitt geneigt wird, um ein Ende des Segments zu spannen und es in der Reifenradialrichtung nach außen zu neigen, wenn das Segment in der Reifenradialrichtung nach außen von dem Laufflächenteil des Reifens getrennt wird.

2. Formwerkzeug zum Reifenformen nach Anspruch 1,
wobei der erste Kontaktteil und der zweite Kontaktteil so angeordnet sind, dass sie in der Reifenradialrichtung getrennt werden, wobei ein Zwischenraum verbleibt, der es ermöglicht, den Außenring dazwischen anzuordnen, und der Außenring in der Reifenradialrichtung zwischen dem ersten Kontaktteil und dem zweiten Kontaktteil des Segments bewegt wird.

3. Formwerkzeug zum Reifenformen nach Anspruch 1 oder 2,
wobei der zweite Kontaktteil so angeordnet ist, dass er von dem zweiten Gleitteil getrennt wird, in einem Zustand, in dem der erste Kontaktteil des Segments in Kontakt mit dem ersten Gleitteil des Außenrings steht; und
der erste Kontaktteil so angeordnet ist, dass er von dem ersten Gleitteil getrennt wird, in einem Zustand, in dem der zweite Kontaktteil des Segments in Kontakt mit dem zweiten Gleitteil des Außenrings steht.

## Revendications

1. Moule pour le moulage d'un pneumatique, comprenant une pluralité de segments pour mouler une partie de bande de roulement qui sont agencés le long d'une direction périphérique du pneumatique, une bague externe qui est déplacée dans une direction de la largeur du pneumatique pour déplacer la pluralité de segments dans une direction radiale du pneumatique, et un mécanisme de tension comportant une partie de tension pour tendre la pluralité de segments vers l'extérieur, dans la direction radiale du pneumatique ;
dans lequel les segments comportent chacun une première partie de contact qui entre en contact avec la bague externe déplacée vers un côté, dans la direction de la largeur du pneumatique, et une deuxième partie de contact qui entre en contact avec la bague externe déplacée vers l'autre côté, dans la direction de la largeur du pneumatique ;
la bague externe comporte une première partie coulissante destinée à contacter de manière coulissante la première partie de contact du segment lors de son déplacement vers un côté, dans la direction de la largeur du pneumatique, pour pousser la première partie de contact du segment vers l'intérieur, dans la direction radiale du pneumatique, et une deuxième partie coulissante qui est destinée à contacter de manière coulissante la deuxième partie de contact du segment lors de son déplacement vers l'autre côté, dans la direction de la largeur du pneumatique, pour pousser la deuxième partie de contact du segment qui est tendue par le mécanisme de tension vers l'extérieur, dans la direction radiale du pneumatique,
**caractérisé en ce que**
le moule pour le moulage du pneumatique comprend en outre un élément de guidage pour guider le segment qui est déplacé dans la direction radiale du pneumatique, l'élément de guidage étant connecté au segment avec un jeu permettant une inclinaison du segment dans une position pour le moulage vers l'extérieur dans la direction radiale du pneumatique, et dans lequel le segment est incliné de la position pour le moulage de la partie de bande de roulement du pneumatique vers l'extérieur, dans la direction radiale du pneumatique, par la partie de tension pour tendre une extrémité du segment et l'incliner vers l'extérieur, dans la direction radiale du pneumatique, lorsque le segment est séparé vers l'extérieur, dans la direction radiale du pneumatique, de la partie de bande de roulement du pneumatique.

2. Moule pour le moulage d'un pneumatique selon la revendication 1,
dans lequel la première partie de contact et la deuxième partie de contact sont agencées de sorte à être séparées dans la direction radiale du pneumatique, laissant un espace permettent d'agencer la bague externe entre celles-ci, et la bague externe est déplacée dans la direction radiale du pneumatique entre la première partie de contact et la deuxième partie de contact du segment.

3. Moule pour le moulage d'un pneumatique selon la revendication 1 ou 2,
dans lequel la deuxième partie de contact est agencée de sorte à être séparée de la deuxième partie coulissante, dans un état où la première partie de contact du segment est en contact avec la première partie coulissante de la bague externe ; et
la première partie de contact est agencée de sorte à être séparée de la première partie coulissante dans un état où la deuxième partie de contact du segment est en contact avec la deuxième partie coulissante de la bague externe.
